# EUROPÄISCHE PATENTSCHRIFT

(11) **EP 3 443 238 B1**
(45) Veröffentlichungstag und Bekanntmachung des Hinweises auf die Patenterteilung: **04.05.2022**
(21) Anmeldenummer: 17717413.3
(22) Anmeldetag: 12.04.2017
(51) Int. Cl.: F16C 33/24, F16C 33/12, F16C 33/20, F16C 29/02

(54) **GLEITLAGERPLATTE**
SLIDING BEARING PLATE
PLAQUE DE GLISSEMENT

(30) Priorität: 14.04.2016 DE 202016101968 U
(43) Veröffentlichungstag der Anmeldung: 20.02.2019
(73) Patentinhaber: Fibro GmbH, 74855 Hassmersheim (DE)
(72) Erfinder: GURT, Jürgen, 74855 Hassmersheim (DE)
(74) Vertreter: Staeger & Sperling Partnerschaftsgesellschaft mbB
(86) Internationale Anmeldenummer: PCT/EP2017/058856
(87) Internationale Veröffentlichungsnummer: WO 2017/178553

(56) Entgegenhaltungen:
- EP-A2- 0 661 470
- US-B1- 6 322 902

## Beschreibung

### Beschreibung:

Die Erfindung betrifft eine metallische Gleitlagerplatte sowie ein Gleitlagerplattenpaar auf dem auf mindestens eine Oberfläche eine Beschichtung aufgebracht ist, zur Verwendung in einem Werkzeug.

Gleitlagerplatten sind typischerweise einer mechanischen, thermischen und erosiven Belastung ausgesetzt und üben zum Beispiel die Funktion einer Gleitfläche zwischen zwei Bauteilen eines Werkzeuges aus.

Aus der Druckschrift US 6322902 B1 ist eine Metallplatte mit intermetallischen Blei-Phasen bekannt auf die ein mit dem Blei bindender Sinterwerkstoff aufgebracht wird. Aus der EP 0 661 470 A2 sind Gleitlagerplatten bekannt, bei der unregelmäßige Gleitlagermuster auf die Oberfläche (nach einem Zufallsprinzip) aufgebracht werden.

Besonders bei Werkzeugen zur mechanischen Umformung und/oder Bearbeitung, bei dem ein Werkzeugoberteil relativ zu einem Werkzeugunterteil in einer Führungsebene bewegt wird, werden Gleitlagerplatten eingesetzt.

Aus der DE 101 24 434 A1 ist ein Verfahren zur Herstellung einer Beschichtung sowie eine Beschichtung für Metalle oder Metalllegierungen wie Stähle, Sintermetalle oder Aluminiumlegierungen aus den Bereichen Automobilbau und Maschinenbau bekannt. Ziel dieser Beschichtung ist es, die genannten Werkstoffe vor Verschleiß und Korrosion zu schützen. Die Beschichtung besteht hierbei aus einer anorganischen Matrixphase.

In einer bestimmten Ausführungsform besteht die Beschichtung aus einer anorganischen Matrixphase aus Aluminiumphosphat, in die Werkstoffe, wie beispielsweise Aluminiumoxid oder Graphit eingebettet sind. Derartige Beschichtungen werden bevorzugt über wasserbasierte Gele oder Dispersionen aus gelöstem Monoaluminiumphosphat und darin dispergierten, pulverförmigen Funktionswerkstoffen auf das zu beschichtende Substrat aufgetragen, getrocknet und in einem Ofen eingebrannt.

Eine weitere Lösung stellen Kunststoffe dar, wie z. B. PTFE. Aufgrund der Tatsache, dass keine Schmiermittel hierbei erforderlich sind, wird PTFE (oder Verbindungen davon), oft in der Lebensmittelindustrie, im Brückenbau, bei der Unterstützung von Rohrsystemen und im Schwerbau genutzt. Wenn PTFE zu frei beweglichen Konstruktionsteilen hinzugegeben wird, können diese durch Temperaturveränderungen ohne Probleme schrumpfen oder sich erweitern, was allerdings im Werkzeugbau von Nachteil ist.

Ferner besteht im Werkzeugbau ein Bedarf nach wartungsarmen hochfesten Gleitplatten mit einer langen Lebensdauer für eine hohe Anzahl an Gleitbewegungen.

Wartungsarme Gleitelemente werden im Werkzeug- und Maschinenbau eingesetzt, wo axiale und lineare Gleitbewegungen vorkommen. Durch die Materiafkombination Bronze und Festschmierstoff sind hervorragende Notlaufeigenschaften gegeben. Die Festschmierstoffdepots bilden dann bei den Gleitbewegungen einen Schmierfilm zwischen den Führungselementen, so dass der Abrieb zwischen den Führungselementen um ein Vielfaches reduziert wird. Nachteilig ist dabei für gewisse Anwendungen, dass vor dem ersten Einsatz solche Führungselemente mit einem Schmiermittel beaufschlagt werden müssen, welches sich dann im Laufe der Zeit aufbraucht.

Die Aufgabe der vorliegenden Erfindung ist es, vorbesagte Nachteile zu überwinden und Gleitlagerplatten bereit zu stellen, die wartungsarm sind, gute Gleiteigenschaften aufweisen und eine hohe mechanische und erosive Beständigkeit besitzen und ferner einfach in der Herstellung und Handhabung sind und bei unterschiedlichen Anwendungen eingesetzt werden können.

Diese Aufgabe wird durch die Merkmalskombination gemäß Schutzanspruch 1 gelöst.

Eine Grundidee der vorliegenden Erfindung ist es, einen Plattenaufbau einer Gleitlagerplatte oder Gleitplatte vorzusehen, bei dem zumindest die Deckschicht aus einem Gleitlagerverbundwerkstoff besteht, welche auf einer Basisschicht, vorzugsweise einer metallischen Grundplatte, weiter vorzugsweise einer Stahlplatte appliziert wurde.

Bevorzugt wird hierzu eine spezifische Verbindungsschicht zwischen der Schicht aus Gleitlagerverbundwerkstoff und der Basisschicht verwendet, um einerseits die Eigenschaften des metallischen Grundwerkstoffes zur Formgebung und zu Stabilitätszwecken zu nutzen und gleichzeitig die Eigenschaften eines spezifischen Gleitlagerverbundwerkstoffes aus einer Kombination verschiedener Übergangsmetalle besteht, welcher eine Bindungsaffinität über eine Verbindungsschicht mit dem Gleitlagerverbundwerkstoff eingeht.

Hierzu ist in einer nicht mit der Erfindung beanspruchten Ausführung vorgesehen, dass als Gleitlagerverbundwerkstoff eine Legierung aus einem überwiegenden Anteil an zwei Metallen, die nicht den Alkalimetallen, Erdalkalimetallen, Übergangsmetallen, Lanthanoiden oder Actinoiden angehören und dem Rest bestehend aus einer Kombination mehrerer Übergangsmetalle und/oder sonstiger Substanzen.

Besonders vorteilhaft ist es, wenn die beiden Metalle Aluminium (Al) und Zinn (Sn) sind. Weiter Vorteilhaft ist es, wenn etwa 67 bis 74 Masse-% Aluminium ist und 15 - 25 Masse-% des Legierungsanteils des Gleitlagerverbundwerkstoffs Zinn ist. Der jeweilige Rest an Masse-% ist mit Vorteil eine Kombination aus Übergangsmetallen (maximal 2,5%), einem Halbmetall und sonstigen Bestandteilen. Selbstredend ist dabei, dass die Summe der gewählten Legierungsbestandteile zusammen 100 Masse-% ergibt.

In einer weiteren vorteilhaften Ausgestaltung der vorgenannten Lösungsind die Übergangsmetalle aus der 4. Gruppe des Periodensystems gewählt, besonders vorteilhaft ist es, wenn diese eine Kombination aus Cu, Ti, Ni, Fe, Zn und Mn darstellen, wobei jedes Übergangsmetall einen Beitrag an der Legierung von maximal 0,9 Masse-% haben sollte.

In einer weiteren Ausführungsform ist vorgesehen, dass ein Legierungselement ein Halbmetall darstellt, wobei bevorzugt Si oder Ge in einem Bestandteil von max. 1 Masse% verwendet wird.

Alle denkbaren Kombinationen der oben aufgeführten Masse-% an Bestandteilen der Legierung, können als geeignete Legierung für den Gleitlagerverbundwerkstoff verwendet werden.

Erfindungsgemäß ist vorgesehen, dass eine Schicht aus Gleitlagerverbundwerkstoff mittels einer Verbindungslage auf die Oberfläche eines metallischen Trägers appliziert wird. Besonders geeignet ist es eine Adhäsionsverbindung zur Verbindung der Gleitlagerverbundwerkstofflage zu verwenden.

In einer alternativen Ausgestaltung der Erfindung kann auch vorgesehen werden, die Gleitlagerverbundwerkstofflage in sogenannte Schmierstofftaschen einzubringen. Weiter kann vorgesehen sein, dass der Gleitlagerverbundwerkstoff gemäß einem Auftragungsmuster auf die metallische Trägerplatte an dazu partiell vorgesehenen Adhäsionsbereichen aufgebracht wird.

In einer alternativen Ausgestaltung können auch Schmiertaschen mit einem Gleitlagerverbundwerkstoff gefüllt werden.

Ein weiterer alternativer Aufbau besteht in der Verwendung von einer Metall-Kunststoff-Verbindung aus einer Gleitlagerschicht, einer Verbindungsschicht und einer Trägerplatte, wobei die Gleitlagerschicht eine Kombination aus einem Fluor-Kohlenstoff-Polymer einem thermoplastischer Fluorkunststoff, vorzugsweise einem teilkristallinen thermoplastischer Fluorkunststoff in geringen Anteilen, sowie einer Gleitlagerschichtmatrix aus einem Salz der Schwefelsäure.

Besonders geeignet ist ein Salz der Schwefelsäure aus einem Erdalkalimetall in einem Massenanteil von etwa 15- 25 Masse-%.

Weiter von Vorteil ist es, wenn die Gleilagerschicht noch eine Faser in der Polymermatrix eingebaut hat, wie eine Kohlenstoff-Faser in etwa in 1,5 Masse-% bis 5 Masse-%.

In einer alternativen Ausgestaltung der Erfindung kann vorgesehen sein, dass die Materialien im Rahmen anderer Applikationsverfahren direkt auf die Basisplatte oder eine auf die Basisplatte aufgebrachte poröse Trägerschicht bzw. Zwischenlage aufgebracht wird. Die Porengröße und Porenform sollte dabei so gewählt sein, dass sich die verwendete Gleitlagerschicht in die Poren einbetten lässt und ein guter Füllgrad erreicht wird, wobei die Poren zur wirksamen Gleitfläche hin offen sind. Eine poröse Oberfläche im Sinne der vorliegenden Erfindung lässt sich durch eine Sinterschicht realisieren, in deren Poren der Verbundwerkstoff eingebracht wird.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: ein erstes Ausführungsbeispiel einer Gleitlagerplatte, die nicht Teil der Erfindung ist,
- Fig. 2: ein alternatives Ausführungsbeispiel einer erfindungsgemäßen Gleitlagerplatte und
- Fig. 3: eine Aufsicht auf eine Trägerplatte-

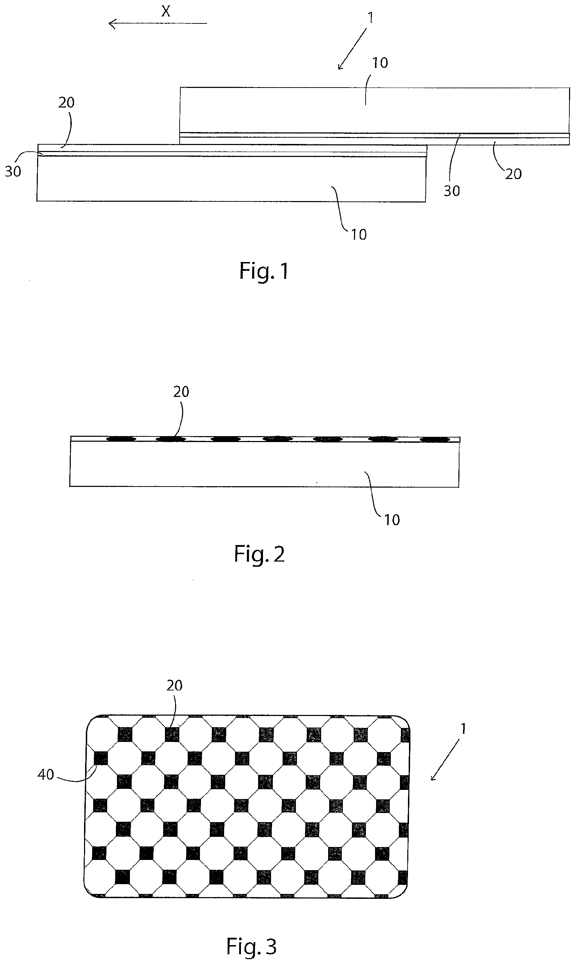

Im Folgenden wird die Erfindung anhand der folgenden Ausführungsbeispiele mit Bezug auf die Figuren 2 und 3 näher erläutert, wobei gleiche Bezugszeichen auf gleiche funktionale und oder strukturelle Merkmale hinweisen.

In der Fig. 1 wird ein erstes Ausführungsbeispiel einer nicht zur Erfindung zählenden Gleitlagerplatte 1 für axiale und lineare Gleitbewegungen entlang der dargestellten Achse X (oder einer gleichen Ebene linearen Bewegung) gezeigt zusammen mit einer beispielhaften Gegengleitlagerplatte 1' als Gleitpartner.

Der Aufbau der Gleitlagerplatte 1 ist wie folgt. Die Gleitlagerplatte 1 besteht aus einer Trägerplatte 10 und einer Deckschicht 20 aus einem spezifischen Gleitlagerverbundwerkstoff. Der spezifische Verbundwerkstoff stellt dabei entweder eine Legierung aus einer Kombination aus wenigstens einem überwiegenden Anteil eines Metalls und einer Kombination aus mehreren Übergangsmetallen dar oder besteht aus einem Metall-Kunststoff-Verbundwerkstoff.

Die Trägerplatte 10 ist eine metallische Grundplatte, ausgebildet als Stahlplatte aus einer Stahllegierung. Auf der metallischen Grundplatte 10 ist in Figur 1 eine adhäsive Verbindungsschicht 30 aufgebracht, welche eine Adhäsionsverbindung zur Deckschicht 20 und zur Grundplatte 10 bildet. Hierbei wurde ein Klebstoff verwendet, der gegenüber Metallen als auch gegenüber Metall-Legierungen eine hohe Adhäsionskraft und damit ein gutes Haftvermögen bildet.

Bei dem Ausführungsbeispiel in Figur 1 wurde eine Legierung aus Aluminium und Zinn verwendet in einem Massen-% Anteil von etwa 73 Masse-% Aluminium und 23 Masse-% Zinn, wobei der Rest aus einer Kombination aus fünf Übergangsmetallen aus der 4. Gruppe des Periodensystems gewählt ist.

Jedes der fünf Übergangsmetalle weist einen Masse-% Anteil an der Legierung von etwa 0,6 Masse-% auf und der Rest besteht aus sonstigen Substanzen.

Bei dem Ausführungsbeispiel in Figur 2 wurde ein Verbundwerkstoff aus einem Fluor-Kohlenstoff-Polymer von etwa 10 Masse-% und einem thermoplastischer Fluorkunststoff in Anteilen von etwa 65 Masse-%, sowie einer Gleitlagerschichtmatrix aus einem Salz der Schwefelsäure.

In der Figur 3 ist der Gleitlagerverbundwerkstoff nicht vollflächig, sondern gemäß einem spezifischen Auftragungsmuster auf die metallische Trägerplatte 10 aufgebracht. Hierzu können Taschen oder Auftragungen 40 verwendet werden. Das gezeigte homogene Muster ist nur beispielhaft und kann auch völlig anders, insbesondere ein inhomogenes Muster darstellen.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Gleitlagerplatte (1) für axiale und lineare Gleitbewegungen für den Werkzeug- und Maschinenbau, wobei die Gleitlagerplatte (1) aus einer Trägerplatte (10) einer Verbindungsschicht und einer Deckschicht (20) aus einem Gleitlagerverbundwerkstoff besteht, bestehend aus einem Fluor-Kohlenstoff-Polymer und einem thermoplastischer Fluorkunststoff sowie einer Gleitlagerschichtmatrix aus einem Salz der Schwefelsäure **dadurch gekennzeichnet, dass** der thermoplastische Fluorkunststoff, ein teilkristalliner thermoplastischer Fluorkunststoff in geringen Anteilen ist.

2. Gleitlagerplatte (1) nach Anspruch 1, **dadurch gekennzeichnet, dass** die Trägerplatte eine metallische Grundplatte, weiter vorzugsweise einer Stahlplatte aus einer Stahllegierung darstellt.

3. Gleitlagerplatte (1) nach einem der vorhergehenden Ansprüche **dadurch gekennzeichnet, dass** die Verbindungsschicht mit dem Gleitlagerverbundwerkstoff eine Adhäsionsverbindung eingeht, welche solche Adhäsionskräfte aufweist, dass auftretende Scherkräfte aufgrund einer Gleitbewegung mit einer zweiten, vorzugsweise korrespondierenden Platte, welche in eine axiale und/oder eine lineare Gleitbewegung mit der Gleitlagerplatte (1) gebracht wird, kein Ablösen der Deckschicht (20) von der Trägerplatte (10) bewirken.

4. Gleitlagerplatte (1) nach einem der vorhergehenden Ansprüche **dadurch gekennzeichnet, dass** der Gleitlagerverbundwerkstoff nicht vollflächig, sondern gemäß einem spezifischen Auftragungsmuster auf die metallische Trägerplatte aufgebracht wird.

5. Gleitlagerplatte (1) nach einem der vorhergehenden Ansprüche **dadurch gekennzeichnet, dass** in der Trägerplatte (10) oder einer auf der Trägerplatte vorhandenen Lage Schmiertaschen (40) vorgesehen sind, die mit dem Gleitlagerverbundwerkstoff gefüllt sind.

6. Gleitlagerplatte (1) nach einem der vorhergehenden Ansprüche, **dadurch gekennzeichnet, dass** das Salz der Schwefelsäure aus einer Erdalkalimetallschwefelsäureverbindung besteht, die in dem Metall-Kunststoff-Verbundwerkstoff mit einem Massenanteil von etwa 15- 25 Masse-% vorgesehen ist.

7. Gleitlagerplatte (1) nach einem der vorhergehenden Ansprüche, **dadurch gekennzeichnet, dass** in dem Metall-Kunststoff-Verbundwerkstoff noch eine Faser eingebaut ist, vorzugsweise eine Kohlenstoff-Faser in etwa in 1,5 Masse-% bis 5 Masse-%.

8. Gleitlagerplatte (1) nach einem der vorhergehenden Ansprüche **dadurch gekennzeichnet, dass** die Basisplatte oder eine auf die Basisplatte aufgebrachte poröse Trägerschicht bzw. Zwischenlage, vorzugsweise in der Form einer Sinterschicht verwendet wird und die Porengröße und Porenform dabei so gewählt ist, dass die verwendete Gleitlagerschicht in die Poren eingebettet ist.

## Claims

1. A plain bearing plate (1) for axial and linear sliding movements for toolmaking and mechanical engineering, wherein the plain bearing plate (1) is composed of a carrier plate (10), a connecting layer, and a surface course (20) made of a plain bearing composite material consisting of a fluorocarbon polymer and a thermoplastic fluoroplastic as well as a plain bearing layer matrix made from a salt of sulfuric acid, **characterized in that** the thermoplastic fluoroplastic is a semicrystalline thermoplastic fluoroplastic in small proportions.

2. The plain bearing plate (1) as set forth in claim 1, **characterized in that** the carrier plate is a metallic base plate, more preferably a steel plate made from a steel alloy.

3. The plain bearing plate (1) as set forth in one of the preceding claims, **characterized in that** the connecting layer forms an adhesive bond with the plain bearing composite material, said adhesive bond having such adhesive forces that shear forces that occur due to a sliding movement with a second, preferably corresponding plate that is caused to undergo an axial and/or linear sliding movement with the plain bearing plate (1) do not bring about any detachment of the surface course (20) from the carrier plate (10).

4. The plain bearing plate (1) as set forth in one of the preceding claims, **characterized in that** the plain bearing composite material is not applied over the entire surface of the metallic carrier plate but rather according to a specific application pattern.

5. The plain bearing plate (1) as set forth in one of the preceding claims, **characterized in that** lubrication pockets (40) which are filled with the plain bearing composite material are provided in the carrier plate (10) or in a layer that is present on the carrier plate.

6. The plain bearing plate (1) as set forth in one of the preceding claims, **characterized in that** the salt of sulfuric acid consists of an alkaline earth metal sulfuric acid compound that is provided in the metal-plastic composite material in a proportion of about 15-25% by mass.

7. The plain bearing plate (1) as set forth in one of the preceding claims, **characterized in that** a fiber, preferably a carbon fiber, is incorporated into the metal-plastic composite material in a proportion of approximately 1.5% to 5% by mass.

8. The plain bearing plate (1) as set forth in one of the preceding claims, **characterized in that** the base plate or a porous carrier layer or intermediate layer that is applied to the base plate, preferably in the form of a sintered layer, is used, and the pore size and pore shape is selected such that the plain bearing layer that is used is embedded in the pores.

## Revendications

1. Plaque de glissement (1) permettant des mouvements de glissement axiaux et linéaires, destinée à la construction d'outils et à la construction mécanique, la plaque de glissement (1) étant constituée d'une plaque de support (10) d'une couche de liaison et d'une couche de recouvrement (20) en matériau composite de glissement, composée d'un polymère fluorocarboné et d'une matière plastique fluorée thermoplastique ainsi que d'une matrice de couche de glissement composée d'un sel de l'acide sulfurique, **caractérisée en ce que** la matière plastique fluorée thermoplastique est une matière plastique fluorée thermoplastique partiellement cristalline en moindres proportions.

2. Plaque de glissement (1) selon la revendication 1, **caractérisée en ce que** la couche de support est une plaque de base métallique, de plus grande préférence une plaque d'acier en alliage d'acier.

3. Plaque de glissement (1) selon l'une quelconque des revendications précédentes, **caractérisée en ce que** la couche de liaison établit avec le matériau composite de glissement une liaison adhésive qui présente des forces d'adhésion telles que des forces de cisaillement apparaissant en raison d'un mouvement de glissement avec une deuxième plaque, de préférence correspondante, qui est mise en mouvement de glissement axial et/ou linéaire avec la plaque de glissement (1) ne provoquent aucun détachement de la couche de recouvrement (20) de la plaque de support (10).

4. Plaque de glissement (1) selon l'une quelconque des revendications précédentes, **caractérisée en ce que** le matériau composite de glissement n'est pas appliqué à la plaque de support sur toute la surface mais selon un motif d'application spécifique.

5. Plaque de glissement (1) selon l'une quelconque des revendications précédentes, **caractérisée en ce que** dans la plaque de support (10) ou une couche présente sur la plaque de support, des alvéoles de lubrification (40) sont prévues qui sont remplies du matériau composite de glissement.

6. Plaque de glissement (1) selon l'une quelconque des revendications précédentes, **caractérisée en ce que** le sel de l'acide sulfurique est composé d'une combinaison de métaux alcalino-terreux et d'acide sulfurique qui est prévue dans le matériau composite métal/matière plastique avec un pourcentage en masse d'environ 15 à 25 % en masse.

7. Plaque de glissement (1) selon l'une quelconque des revendications, **caractérisée en ce que** dans le matériau composite métal/matière plastique, une fibre est incorporée en plus, de préférence une fibre de carbone avec environ 1,5 % en masse à 5 % en masse.

8. Plaque de glissement (1) selon l'une quelconque des revendications précédentes, **caractérisée en ce que** la plaque de base ou une couche de support, ou couche intermédiaire, poreuse, appliquée à la plaque de base, de préférence sous la forme d'une couche de frittage, est utilisée et la dimension et forme des pores étant alors sélectionnées de telle sorte que la couche de glissement utilisée est incorporée dans les pores.
